# EUROPEAN PATENT SPECIFICATION

(11) **EP 1 951 818 B1**
(45) Date of publication and mention of the grant of the patent: **27.05.2009**
(21) Application number: 06829949.4
(22) Date of filing: 09.11.2006
(51) Int. Cl.: C08L 95/00

(54) **BITUMEN COMPOSITION**
BITUMENZUSAMMENSETZUNG
COMPOSITION BITUMEUSE

(30) Priority: 10.11.2005 EP 05292400
(43) Date of publication of application: 06.08.2008
(73) Proprietor: Shell Internationale Research Maatschappij B.V., 2596 HR Den Haag (NL)
(72) Inventor: BOBEE, David, F-76650 Petit Couronne (FR); LEBIGRE, Sylvie, Claude, F-76650 Petit Couronne (FR); SEIVE, Alain, Marcel, Bernard, F-76650 Petit Couronne (FR)
(74) Representative: Zeestraten, Albertus W. J.
(86) International application number: PCT/EP2006/068201
(87) International publication number: WO 2007/054503

(56) References cited:
- WO-A-02/16499
- WO-A-20/04009739
- US-A- 3 655 563
- US-A- 4 140 536

## Description

The invention is directed to a bitumen composition comprising a paraffin wax additive. The invention is also directed to the paraffin wax additive itself.

Bitumen compositions are widely applied as road surfaces for motor vehicles and airplanes. These compositions are also referred to as asphalt and comprise bitumen and aggregates such as sand, gravel, grit or the like. Additives are widely applied to improve certain properties of the bitumen composition for use as road surface.

US-A-6588974, WO-A-0216499 and AU-B-200137219 disclose a bitumen composition containing a Fischer-Tropsch paraffin (FT paraffin) as an additive. According to US-A-6588974 the Fischer-Tropsch paraffin additive is a mixture of more than 90% n-alkanes and the remainder being iso-alkanes. An advantage of adding the FT paraffin additive is that the additive lowers the viscosity of the bitumen composition at elevated, e.g. 135 and 180 °C, temperature. This is advantageous because at that temperature the bitumen mixture is used when making road surfaces. In other words the additive improves the workability of the bitumen composition.

According to these publications the FT paraffin has a chain length of between 30 and 100 carbon atoms. AU-B-200137219 exemplifies a commercially available Fischer-Tropsch paraffin additive as SASOBIT (SASOBIT is Registered Trademark). According to the product specifications dated 11.11.2003 for SASOBIT the congealing range according to DIN-ISO 02207 is ≤ 99 °C as published by Sasol Wax GmbH, Hamburg.

A problem encountered by the addition of the FT paraffin wax additives is that the Fraass point remains the same or even increases when the content of additives increases. The Fraass point (EN12593) is indicative for the brittleness of the bitumen mixture at low temperatures. In this test a sample of bituminous binder is applied on a metal plate. This plate is submitted to a constant cooling rate and flexed repeatedly until the binder layer breaks; the temperature at which the first crack appears is reported as the Fraass breaking point. A low Fraass point is for example desirable when road surfaces are made in areas having a cold climate.

Applicant now found that the Fraass point can be lowered when instead of a highly normal paraffin wax a slightly isomerised paraffin wax is used. Applicant further found that in addition the viscosity at elevated temperatures is lowered comparable to when using the state of the art normal paraffin FT paraffin additive.

The invention is therefore directed to the following bitumen composition. Bitumen composition comprising a paraffin wax having a congealing point of between 85 and 120 °C and a PEN at 43 °C, expressed in 0.1 mm, as determined by IP 376 of more than 5.

The invention is also directed to a paraffin wax having a congealing point of between 85 and 120 °C and a PEN at 43 °C, expressed in 0.1 mm, as determined by IP 376 of more than 5 in suitable form for use as a bitumen additive. This additive will also be referred in this application as the soft paraffin wax additive.

The invention is also directed to a process to lower the Fraass point of a bitumen composition by adding to a bitumen composition a paraffin wax having a congealing point of between 85 and 120 °C, as determined by ISO 2207, and a PEN at 43 °C, expressed in 0.1 mm, as determined by IP 376 of more than 5.

The soft paraffin wax additive having generally the combination of said congealing point and PEN values constitute for a major portion of iso-paraffins. The quantity of iso-paraffins is however difficult to quantify in this boiling range. For this reason these more easily quantifiable properties are used. The soft paraffin wax additive has a congealing point of between 85 and 120 °C and a PEN at 43 °C, expressed in 0.1 mm, as determined by IP 376 of more than 5.

Preferably the congealing point of the above wax is above 90 °C

In order to reduce the Fraass temperature significantly it is preferred to use a soft wax having a PEN at 43 °C expressed in 0.1 mm of greater than 7, more preferably greater than 8 and even more preferably greater than 10. The PEN at 43 °C is preferably below 350. If one desires to achieve both an increase in softening point according to EN1427 and a reduction in Fraass temperature the PEN at 43 °C is preferably between 5 and 70, more preferably between 7 and 70. The TBC-GLC recovery at 450 °C is preferably less than 2 wt%, more preferably less than 1 wt%. The softness of the wax can be influenced by adjusting the process conditions of the manufacturing process and/or by blending soft wax and hard wax, wherein the hard wax can be a more normal paraffinic wax such as for example SASOBIT or the Sarawax SX100 or Sarawax SX105 type wax products as obtainable from Shell MDS Malaysia Sdn Bhd.

The bitumen include those with penetrations in the range of 1 to 450 mm/10 as determined in accordance with EN 1426. The softening point of suitable bitumens may range from 30 to 130 °C, preferably, 40 to 100 °C as determined in accordance with EN 1427. The penetration index of suitable bitumens may range between +9 and -3. The viscosity at 60 °C may be 10 to 20,000 Pas.

The content of soft paraffin wax additive in the bitumen composition according to the invention may be up to 20 wt%, more preferably between 0.1 to 20 wt%, even more preferably between 0.5 to 10 wt%, even more preferably above 3 wt%. Applicant found that when the partly isomerised paraffin wax is used the Fraass temperature decreases, even at higher contents of said partly isomerised paraffin wax. When instead the substantially normal paraffin wax, like for example the commercial SASOBIT product, is used in a high content the Fraass temperature does not improve with respect to the starting bitumen.

The soft paraffin wax additive may be blended with the bitumen using any-suitable method. For instance, the additive may be added in divided form, for example as pellets or as a powder or in a molted state, to the bitumen. The bitumen may be in the molten state, which is at a temperature sufficient to dissolve or disperse the additive. Suitable temperatures range between 120 and 230 °C, preferably, 130 and 190 °C.

It may be possible to add sufficient additive to the bitumen to produce a wax/bitumen blend of the desired final concentration. In certain applications, however, it may be desirable to produce a concentrated blend or "masterbatch" of the additive and bitumen, which may be mixed with additive-free bitumens or bitumen having a low additive concentration to produce blends of the desired final composition. Suitably, the masterbatch may comprise the additive in a concentration of 10 to 30 wt%.

The bitumen composition according to the invention may be employed as a binder for aggregates to form an asphalt composition. The aggregates employed in such compositions include conventional aggregates such as granite. Optionally, fillers of, for example, limestone and cellulose may also be included in the bituminous composition. Sand and dust may also be present.

Next to the soft paraffin wax additive also other additives may be present. Examples of possible other additives are polymers such as elastomers, for example styrene-butadiene co-polymer, styrene-butadiene-styrene copolymer; plastomers, for example ethylene vinyl acetate co-polymer, poly ethylene and combinations of said polymers, reactive polymers, for example reactive ethylene ter polymer, acrylate copolymers, cross-linking agents, for example sulphur and sulphur containing compounds, adhesion dopes and IP booster, for example polyphosphoric acid.

When the bitumen composition according the invention is employed as a binder with aggregates, the bitumen composition may form 1 to 20 wt%, preferably, 2 to 15 wt%, more preferably, 4 to 10 wt%, and most preferably, 4 to 7 wt% of the overall asphalt composition. The aggregate content of the overall composition maybe more than 50 wt%, preferably, more than 60 wt%, even more preferably, more than 70 wt% for example, 75 to 90 wt%. The remainder of the asphalt composition may comprise sand, cellulose and/or limestone.

When preparing the asphalt composition, it may be possible to add the soft paraffin wax additive to the bitumen, in the presence of the aggregates and/or fillers. It may also be possible to mix the additive with the bitumen prior to the addition of aggregate and/or filler. An example of a possible method of adding the soft paraffin wax additive is described in AU-B-200137219.

Asphalt compositions as described above may be used as pavings and coverings for a variety of surfaces, particularly, for example, lorry parks, motorway road surfacing, air fields, residential roads, service station forecourts, car parks, taxi-ways and driveways. The bitumen composition may also be beneficially used in so-called top layers and sub layers as accordance with the teaching of US-A-6588974 for normal paraffin wax containing bitumen compositions, which reference is incorporated by reference.

The bitumen composition according to the present invention may also be used as part of a so-called joint sealants, which are for example used to fix concrete elements in airport surfaces, or as part of a roofing felt composition.

The soft paraffin wax additive is preferably obtained by hydroisomerisation of the substantially linear paraffin wax as obtained in a Fischer-Tropsch process. The wax having the required congealing point may be isolated by distillation from the hydroisomerised product or alternatively the feed to the hydroisomerisation is so chosen that the soft wax additive is directly obtained from the hydroisomerised product. The properties of the wax additive as obtained in said hydroisomerisation can be suitably modified by blending the wax as obtained by said hydroisomerisation and FT paraffin comprising of more than 90% n-alkanes. Examples of the latter are the afore mentioned SASOBIT, Paraflint H1 and Sarawax SX100 and Sarawax SX105. Paraflint HI is obtainable from Sasol-Moore and Munger. The Sarawax products are obtainable from Shell MDS Malaysia Sdn Bhd. Applicants found that by using a blend of the FT normal paraffin and the soft paraffin wax additive a bitumen composition can be obtained wherein the Fraass temperature is lowered and the high temperature properties are improved. Preferably the congealing point and the PEN at 43 °C of such a blended wax has the properties as described above.

Examples of the Fischer-Tropsch synthesis and routes to this soft wax additive are described in WO-A-02102941, EP-A-1498469, WO-A-2004009739 and EP-A-1268712.

Applicants found that a very suitable soft paraffin wax can be obtained as a by-product of the following process wherein middle distillates are prepared from a Fischer-Tropsch wax. This process comprises the steps of (a) hydrocracking/ hydroisomerisating a Fischer-Tropsch product, (b) performing one or more distillate separations on the effluent of step (a) to obtain a middle distillate fuel fraction and a soft paraffin wax additive having an initial boiling point of between 500 and 600 °C. The additive is preferably obtained as a residual fraction in a vacuum distillation step. The PEN value at 43 °C of the wax as obtained by said process may be reduced if required by blending this wax with a wax fraction isolated by distillation from the starting Fischer-Tropsch product. This fraction, preferably hydrogenated in order to remove oxygenates and olefins and having a congealing point of between 90 and 120 °C, is a substantially normal paraffin wax having a lower PEN value at 43 °C. By blending this component with the softer wax a controlled value for the PEN at 43 °C may be obtained.

In order to obtain a wax additive product having the desired PEN and congealing point in combination with a commercial attractive yield of the middle distillate main product it has been found that it is advantageous to start from a relatively heavy Fischer-Tropsch product. The relatively heavy Fischer-Tropsch product has suitably at least 30 wt%, preferably at least 50 wt%, and more preferably at least 55 wt% of compounds having at least 30 carbon atoms. Furthermore the weight ratio of compounds having at least 60 or more carbon atoms and compounds having at least 30 carbon atoms of the Fischer-Tropsch product is suitably at least 0.2, preferably at least 0.4 and more preferably at least 0.55. Preferably the Fischer-Tropsch product comprises a C₂₀+ fraction having an ASF-alpha value (Anderson-Schulz-Flory chain growth factor) of at least 0.925, preferably at least 0.935, more preferably at least 0.945, even more preferably at least 0.955.

The initial boiling point of the Fischer-Tropsch product as feed to step (a) may range up to 400 °C, but is preferably below 200 °C. Preferably any compounds having 4 or less carbon atoms and any compounds having a boiling point in that range are separated from a Fischer-Tropsch synthesis product before the Fischer-Tropsch synthesis product is used in step (a). In addition to the Fischer-Tropsch product also other fractions may be additionally processed in step (a). Possible other fractions may suitably be any excess microcrystalline wax as obtained in step (b).

Such a Fischer-Tropsch product can be obtained by any process, which yields a relatively heavy Fischer-Tropsch product. Not all Fischer-Tropsch processes yield such a heavy product. An example of a suitable Fischer-Tropsch process is described in WO-A-9934917. These processes may yield a Fischer-Tropsch product as described above.

The Fischer-Tropsch product will contain no or very little sulphur and nitrogen containing compounds. This is typical for a product derived from a Fischer-Tropsch reaction, which uses synthesis gas containing almost no impurities. Sulphur and nitrogen levels will generally be below the detection limits, which are currently 5 ppm for sulphur and 1 ppm for nitrogen. The soft paraffin wax additive will consequently also have such low sulphur and nitrogen levels. The process conditions and other directions of how to perform the above process have been reported earlier by applicant in WO-A-2004009739 which publication is hereby incorporated by reference.

The soft wax as obtained from one of the above Fischer-Tropsch processes is suitably transformed into a form in which handling of the product is facilitated. Suitable forms are containers filled with solid wax product, which containers can be heated at the location of use and wherein the wax is added to the bitumen in its liquid state. Heated containers containing the wax in its liquid state may also be used. The wax may also be provided as pellets, extrudates, flakes or powder. In order to avoid the wax particles to stick to each other silica powder and the like may be added to provide a less sticky surface of the wax particles.

The invention will be illustrated with the following non-limiting examples.

### Example 1

To a 35/50 pen grade bitumen having the properties as listed in Table 2 1,5, 3 and 6 wt% of a soft paraffin wax additive having the properties as listed in Table. 1 have been added. Mixing was performed at 160 °C. The soft paraffin wax made according to the principle of Example 1 of WO-A-2004/009739.

The viscosity at 135, 150 and 170 °C and the Fraass point were measured of the resulting mixtures. The results are listed in Table 3.

### Example 2

Example 1 was repeated using a 70/100 pen grade bitumen having the properties listed in Table 2. The viscosity at 135, 150 and 170 °C and the Fraass point were measured of the resulting mixtures. The results are listed in Table 4.

### Comparative Experiment A

Example 1 was repeated using SASOBIT having the properties as listed in Table 1. The viscosity at 135, 150 and 170 °C and the Fraass point were measured of the resulting mixtures. The results are listed in Table 3.

### Comparative Experiment B

Example 2 was repeated using SASOBIT having the properties as listed in Table 1. The viscosity at 135, 150 and 170 °C and the Fraass point were measured of the resulting mixtures. The results are listed in Table 4.

### Example 3

To the 35/50 pen grade bitumen of Example 1 6 wt% of a 50/50 wt% blend of the soft wax additive and the SASOBIT (see Table 1) were added. The PEN at 43 °C (0.1 mm) of the resulting wax blend was 39.

The increase in softening point relative to the starting bitumen was 24.6 °C and the decrease in Fraass temperature relative to the starting bitumen was 2 °C.

Table 3 and Table 4 show at a given concentration and for a given bitumen, the additive of the invention leads to the lowest Fraass breaking point values for the corresponding bituminous blend when compared to the unmodified and the SASOBIT modified bitumen.

These Tables also show that the additive of the invention reduces the viscosity at a given temperature of the corresponding bitumen blends when compared to the unmodified bitumen.

**Table 1**

| | SASOBIT | Soft paraffin wax additive |
|---|---|---|
| Congealing point (ISO 2207)(°C) | 100 | 97 |
| Initial boiling point (°C) TBC-GLC | 470 | 434 |
| TBC-GLC recovery at 450 °C (wt%) | 0 | 0.6 |
| TBC-GLC recovery at 500 °C (wt%) | 1.1 | 1 |
| PEN at 43 °C (0.1 mm) | 3 | >250 (*) |

| | | |
|---|---|---|
| (*) the PEN at 43 °C (0.1 mm) for a similar soft wax products obtainable via the same process was 317 as expressed in 0.1 mm. | | |

**Table 2**

| Bitumen properties | PEN at 25 °C (dmm) (EN1426) | Softening point (°C) (EN1427) | PI (pen25/sft) |
|---|---|---|---|
| 35/50 pen grade | 41 | 52 | -1.15 |
| 70/100 pen grade | 84 | 46.4 | -0.87 |

**Table 3**

| | Additive content (wt%) | Viscosity at 135 °C (Pa.s) | Viscosity at 150 °C (Pa.s) | Viscosity at 170 °C (Pa.s) | Fraass (°C) |
|---|---|---|---|---|---|
| Bitumen of Example 1 and A | 0 | 0.43 | 0.22 | 0.10 | -7 |
| Example 1 | 1.5 | 0.4 | 0.2 | 0.09 | -13 |
| A | 1.5 | 0.39 | 0.2 | 0.09 | -7 |
| Example 1 | 3 | 0.35 | 0.18 | 0.08 | -11 |
| A | 3 | 0.36 | 0.18 | 0.08 | -7 |
| Example 1 | 6 | 0.29 | 0.15 | 0.07 | -15 |
| A | 6 | 0.22 | 0.12 | 0.06 | -6 |

**Table 4**

| | Additive content (wt%) | Viscosity at 135 °C (Pa.s) | Viscosity at 150 °C (Pa.s) | Viscosity at 170 °C (Pa.s) | Fraass (°C) |
|---|---|---|---|---|---|
| Bitumen of Example 2 and B | 0 | 0.25 | 0.13 | 0.06 | -15 |
| Example 2 | 1.5 | 0.24 | 0.13 | 0.06 | -19 |
| B | 1.5 | 0.24 | 0.12 | 0.06 | -12 |
| Example 2 | 3 | 0.22 | 0.11 | 0.05 | -16 |
| B | 3 | 0.21 | 0.11 | 0.05 | -10 |
| Example 2 | 6 | 0.18 | 0.1 | 0.05 | -25 |
| B | 6 | 0.17 | 0.1 | 0.05 | -10 |

## Claims

1. Bitumen composition comprising a paraffin wax, wherein the wax has a congealing point (ISO 2207) of between 85 and 120 °C and a PEN at 43 °C, expressed in 0.1 mm, as determined by IP 376 of more than 5.

2. Bitumen composition according to claim 1, wherein the paraffin wax has a PEN at 43 °C as determined by IP 376 of more than 7.

3. Bitumen composition according to any one of claims 1-2, wherein the paraffin wax has a PEN at 43 °C as determined by IP 376 of below 350.

4. Bitumen composition according to claim 3, wherein the paraffin wax has a PEN at 43 °C as determined by IP 376 of below 70.

5. Bitumen composition according to any one of claims 1-4, wherein the bitumen component has a penetration (EN 1426) in the range of 1 to 450 mm/10, a softening point (EN1427) from 30 to 130 °C, a penetration index (pen25/sft) between +9 and -3 and a viscosity at 60 °C between 10 to 20,000 Pas.

6. Bitumen composition according to any one of claims 1-5, wherein the content of the paraffin wax is between 0.5 and 10 wt%.

7. Bitumen composition according to any one of claims 1-6 wherein the paraffin wax is obtained by a process comprising the steps of (a) hydrocracking/ hydroisomerisating a Fischer-Tropsch product, (b) performing one or more distillate separations on the effluent of step (a) to obtain a middle distillate fuel fraction and a soft paraffin wax additive having an initial boiling point of between 500 and 600 °C.

8. Bitumen composition according to claim 7 wherein the wax as obtained in said process is blended with a normal paraffin wax fraction having a congealing point (ISO 2207) of between 90 and 120 °C as isolated by distillation from the Fischer-Tropsch product.

9. Asphalt composition comprising aggregates and between 1 and 20 wt% of the bitumen composition according to any one of claims 1-8.

10. Use of the asphalt of claim 9 as a road surface.

11. Process to lower the Fraass point (EN12593) of a bitumen composition by adding to a bitumen composition a paraffin wax having a congealing point (ISO 2207) of between 85 and 120 °C and a PEN at 43 °C, expressed in 0.1 mm, as determined by IP 376 of more than 5.

## Patentansprüche

1. Bitumenzusammensetzung, umfassend ein Parafinwachs, wobei das Wachs einen Erstarrungspunkt (ISO 2207) von 85 bis 120°C und eine PEN bei 43°C, ausgedrückt in 0,1 mm, bestimmt nach IP 376, von mehr als 5 aufweist.

2. Bitumenzusammensetzung nach Anspruch 1, wobei das Parafinwachs eine PEN bei 43°C, bestimmt nach IP 376, von mehr als 7 aufweist.

3. Bitumenzusammensetzung nach einem der Ansprüche 1 bis 2, wobei das Parafinwachs eine PEN bei 43°C, bestimmt nach IP 376, von unter 350 besitzt.

4. Bitumenzusammensetzung nach Anspruch 3, wobei das Parafinwachs eine PEN bei 43°C, bestimmt nach IP 376, von unter 70 besitzt.

5. Bitumenzusammensetzung nach einem der Ansprüche 1 bis 4, wobei die Bitumenkomponente eine Penetration (EN 1426) im Bereich von 1 bis 450 mm/10, einen Erweichungspunkt (EN 1427) von 30 bis 130°C, einen Penetrationsindex (pen25/sft) von +9 bis -3 und eine Viskosität bei 60°C von 10 bis 20000 Pas aufweist.

6. Bitumenzusammensetzung nach einem der Ansprüche 1 bis 5, wobei der Gehalt an Parafinwachs von 0,5 bis 10 Gew.-% beträgt.

7. Bitumenzusammensetzung nach einem der Ansprüche 1 bis 6, wobei das Parafinwachs durch ein Verfahren erhalten wird, umfassend die Schritte von (a) Hydrocracken/Hydroisomerisieren einer Fischer-Tropsch-Produkts, (b) Durchführen von einer oder mehreren Destillattrennungen mit dem Abstrom aus Schritt (a), um eine Mitteldestillatbrennstofffraktion und ein weiches Parafinwachsadditiv mit einem Anfangssiedepunkt von 500 bis 600°C zu erhalten.

8. Bitumenzusammensetzung nach Anspruche 7, wobei das Wachs, so wie es in diesem Verfahren erhalten wird, mit einer normalen Parafinwachsfraktion mit einem Erstarrungspunkt (ISO 2207) von 90 bis 120°C vermischt wird, wie es durch Destillation aus dem Fischer-Tropsch-Produkt isoliert wird.

9. Asphaltzusammensetzung, umfassend Aggregate und 1 bis 20 Gew.-% der Bitumenzusammensetzung nach einem der Ansprüche 1 bis 8.

10. Verwendung des Asphalts nach Anspruch 9 als Straßenbelag.

11. Verfahren zur Verringerung des Fraass-Punktes (EN 12593) einer Bitumenzusammensetzung durch Zusetzen zu einer Bitumenzusammensetzung von einem Parafinwachs mit einem Erstarrungspunkt (ISO 2207) von 85 bis 120°C und einer PEN bei 43°C, ausgedrückt in 0,1 mm, bestimmt nach IP 376, von mehr als 5.

## Revendications

1. Composition bitumeuse comprenant une cire de paraffine, dans laquelle la cire présente un point de congélation (ISO 2207) qui est compris entre 85°C et 120°C, et une valeur PEN à 43°C, exprimée en 0,1 mm, déterminée selon IP 376, supérieure à 5.

2. Composition bitumeuse selon la revendication 1, dans laquelle la cire de paraffine présente une valeur PEN à 43°C, déterminée selon IP 376, supérieure à 7.

3. Composition bitumeuse selon l'une quelconque des revendications 1 à 2, dans laquelle la cire de paraffine présente une valeur PEN à 43°C, déterminée selon IP 376, inférieure à 350.

4. Composition bitumeuse selon la revendication 3, dans laquelle la cire de paraffine présente une valeur PEN à 43°C, déterminée selon IP 376, inférieure à 70.

5. Composition bitumeuse selon l'une quelconque des revendications 1 à 4, dans laquelle le composant de bitume présente une pénétration (EN 1426) qui est comprise dans la gamme de 1 à 450 mm/10, un point de ramollissement (EN 1427) compris entre 30°C et 130°C, un indice de pénétration (pen25/pied carré) compris entre +9 et -3, et une viscosité à 60°C comprise entre 10 et 20 000 Pas.

6. Composition bitumeuse selon l'une quelconque des revendications 1 à 5, dans laquelle la teneur en cire de paraffine est comprise entre 0,5 % en poids et 10 % en poids.

7. Composition bitumeuse selon l'une quelconque des revendications 1 à 6, dans laquelle la cire de paraffine est obtenue par un procédé comprenant les étapes suivantes: (a) exécuter l'hydrocraquage/hydroisomérisation d'un produit de Fischer-Tropsch; (b) exécuter une ou plusieurs opérations(s) de séparation de distillat sur l'effluent de l'étape (a) pour obtenir une fraction combustible de distillat moyenne et un additif de cire de paraffine tendre qui présente un point d'ébullition initial qui est comprise entre 500°C et 600°C.

8. Composition bitumeuse selon la revendication 7, dans laquelle la cire ainsi obtenue avec ledit procédé est mélangée avec une fraction de cire de paraffine normale qui présente un point de congélation (ISO 2207) qui est compris entre 90°C et 120°C lorsqu'il est isolé par distillation à partir du produit de Fischer-Tropsch.

9. Composition d'asphalte comprenant des granulats et entre 1 % en poids et 20 % en poids de la composition bitumeuse selon l'une quelconque des revendications 1 à 8.

10. Utilisation de l'asphalte selon la revendication 9 comme revêtement de route.

11. Procédé pour abaisser le point de Fraass (EN 12593) d'une composition bitumeuse en ajoutant à une composition bitumeuse une cire de paraffine qui présente un point de congélation (ISO 2207) qui est compris entre 85°C et 120°C, et une valeur PEN à 43°C, exprimée en 0,1 mm, déterminée selon IP 376, supérieure à 5.
